# EUROPEAN PATENT SPECIFICATION

(11) **EP 3 180 105 B1**
(45) Date of publication and mention of the grant of the patent: **21.11.2018**
(21) Application number: 15771248.0
(22) Date of filing: 05.08.2015
(51) Int. Cl.: B01D 53/84, B01J 19/20

(54) **A BIOREACTOR FOR PURIFYING GASES**
BIOREAKTOR ZUR REINIGUNG VON GASEN
BIORÉACTEUR POUR LA PURIFICATION DE GAZ

(30) Priority: 13.08.2014 PL 40917714
(43) Date of publication of application: 21.06.2017
(73) Proprietor: Ichemad-Profarb Sp. Z O.o., 44-100 Gliwice (PL)
(72) Inventor: MARIAN, Adamek, PL-44-100 Gliwice (PL)
(74) Representative: Korga, Leokadia
(86) International application number: PCT/IB2015/055932
(87) International publication number: WO 2016/024189

(56) References cited:
- WO-A1-93/18800
- DE-A1- 3 422 045
- DE-C1- 19 608 805
- GB-A- 2 132 503
- US-A- 5 618 430
- US-A- 6 013 512

## Description

The subject of the invention is a bioreactor for purifying gases from volatile organic compounds and their sparingly water soluble mixtures. The description in patent application of the EP1012253 (A1) invention relates to the use of microorganisms for biodegrading contaminants and discloses examples of its application. The invention relates to selected microorganisms capable of biodegrading organic or inorganic contaminants present in soil (solids), liquids or gases. The contaminants include priority pollutants including highly volatile organic compounds (VOCs), recalcitrant organic contaminants or inorganic contaminants such as ammonia or sulfides. The invention particularly relates to biodegradation of organic contaminants by microorganisms from the groups fungus, Nocardioforms/Actinomycetes and *Pseudomonadacae*, either alone or in combination, which biodegrade the contamination in either the solid/soil, gas/vapor or liquid/water phases; and the transformation of inorganic contaminants, such as ammonia by *Nitrosomonas* spp. and *Nitrobacter* spp. to nitrate with optional denitrification, and hydrogen sulfide to elemental sulfur by *Beggiatoa* spp. and/or *Thiosphera pantotropha.* Porous media and cord media are used to construct the reaction sites.

It is known from the patent description DE 3422045, corresponding to the preamble of claim 1, a process and a biofilter device ensuring, without great expense on apparatus, high efficacy of the biomass, where the biomass is subjected to disorderly motion inside the filter tank.
It is known from the patent description GB- 2 132 503 a horizontally positioned packing element for a biological filter or for use in mass transfer, comprising one or more rims providing trickling faces (1, 2) along which a liquid or gas is arranged to flow in contact with another medium, e.g. oxidizing air. Trickling faces (1,2) are angled at 1 DEG -50 DEG , preferably 5 DEG -15 DEG , with respect to the intended main flow direction of the liquid or gas to be treated. The diameter of said packing element is greater than its height. At least one side of the packing element is provided with a depression (8). The number of rims may be 1-5, and these may be circular, elliptic, or square in cross-section, or may be a continuous wound spiral, the rims are joined by webs (4), and may have reinforcing webs (3), all of these being rounded off at their extremities (5).

The aim of the invention is to construct a bioreactor using a worm system. A bioreactor with a worm system enables purification of mixtures of industrial gases from volatile organic compounds (hereinafter referred to as VOC) and their mixtures, which are sparingly water soluble.

The bioreactor for purifying gas comprising an active biofilm of microorganisms and equipped with a sprinkler and a control system of the circulating liquid according to the invention characterised in that in the reactor there is a vertically movable worm with at least two coils in which grooves are dextrorotatory and levorotatory to the worm axis, covered with an active biofilm of microorganisms. Favourably, the gas which is being purified may be flowing cocurrently or countercurrently to the liquid.

The main advantage of the bioreactor with a worm system is that the active film of microorganisms is formed on the expanded surfaces of the coils in the worm system, which eliminates the need to provide large volume packing resulting in a large volume of the reactor. The worm coils are grooved in a characteristic way thus providing an expansion of the surface of the individual coils, which ensures the required amount of the active BIO bed while optimizing the volume of the reactor at the same time. Moreover, the worm system ensures a constant, controlled inflow of the gases to be purified to the BIO bed located on the coils and ensures its activity. he activity of the BIO bed and therefore the efficiency of the process of purification of industrial gases from VOC is increased by the movement of the worm in the direction opposite (in the countercurrent system) to the gas to be purified inflowing into the bioreactor. In the case of a drastic change in the operation of the production installation e.g. as a result of a break-down in the technological line, which is followed by a drastic decrease or increase of the amount of VOC gas to be purified, the worm system ensures a smooth and immediate change of direction of the gas flow. The number of worm coils is determined individually for the needs of a particular installation depending on the VOC content in the industrial gases, the time required to eliminate the VOC, the operating conditions of the industrial installation and other specific requirements.

An additional advantage of the invention is such construction of the bioreactor, which enables the purification of large streams of gas without the danger of flooding the column once the flow of gas and liquid is changed into concurrent down-flow. Moreover by adjusting the number of worm coils and the rotation speed of the worm it is possible to ensure that the residence time of the reaction mixture in the bed is appropriate for the contamination which is being eliminated. It is also important that in the presented solution the liquid sprinkling the bed provides the microorganisms with nutrients as well as removes from the bed the products of decomposition of the contaminants which are harmful to the microorganisms. The said products of decomposition may be removed or neutralized in the circulating liquid tank.

The bioreactor according to the invention is easy to control and regulate the operating parameters. It is also easy to control the surplus of the biomass in the packing. In order to remove it, it is enough to flush the bed with a stream of liquid 50% greater than that used in the process.

The subject of the invention in a non-restrictive embodiment is presented in the drawing, where:

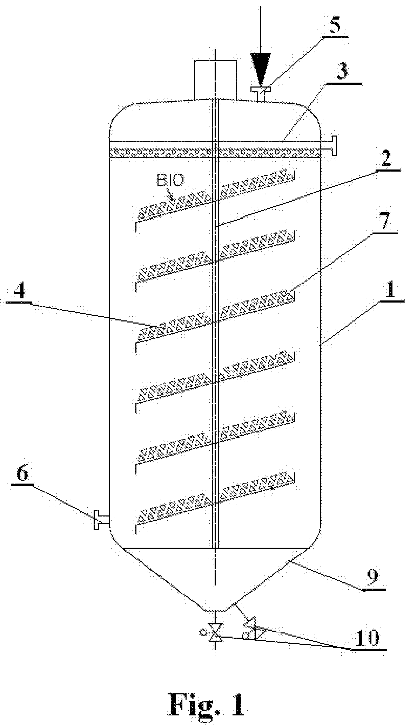

Fig.1 presents a sketch of the bioreactor in section;

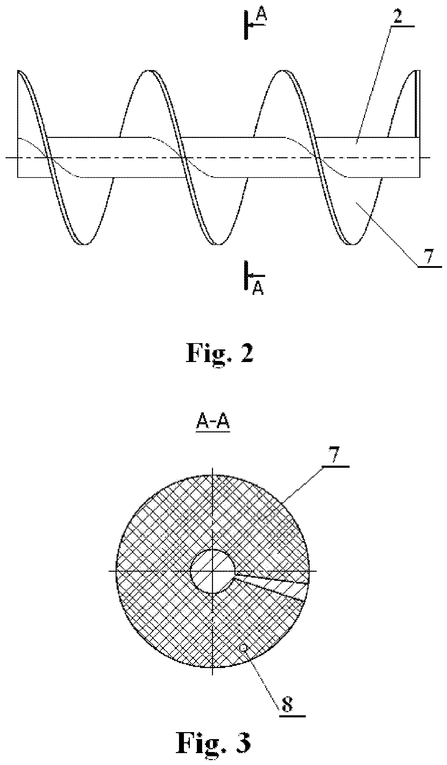

Fig. 2 presents worm coils in the bioreactor;
Fig. 3 presents a section of a worm coil;

### Embodiment 1.

A bioreactor for purifying gases operating with cocurrent flow of gas and liquid comprises a tank 1 in which there is a worm 2 with six coils 7 in which grooves 8 are made transverse to the dextrorotatory and levorotary axes constituting the packing onto which microorganisms are inoculated. The active film of microorganisms 4 is formed on the expanded surfaces of the coils 7 of the worm 2. The active film of microorganisms consists of colonies of aerobic bacteria. In the top part of the reactor 1 below the inlet 5 of the contaminated gas there is a sprinkler 3 comprising sprinkling points whose number is adjusted to the column section, no fewer however than 100 per m2 of the reactor.

Contaminated air is distributed evenly around each sprinkling point. The outlet 6 of gas purified from VOC is located in the bottom part of the side surface of the tank 1, whereas in the cone-shaped bottom 9 there are valves 10 for the system controlling the level of the circulating liquid. The bottom 9 is filled with a solution to such a level that all of the purified air is directed to the outlet 6. Depending on the operation of the industrial installation, i.e. the BIO bed load, at intervals of approximately 24h 10% of the volume of the mineral salts solution circulating in the installation is replaced with a fresh mineral salts solution, which provides the microorganisms with nutrients necessary for proper functioning.

## Claims

1. A bioreactor for purifying gases comprising an active biofilm of microorganisms and equipped with a sprinkler and a control system of the circulating liquid wherein in the reactor (1) there is a rotatably movable worm (2) with at least two coils (7), **characterised in that**, in said coils grooves (8) are made transverse to dextrorotatory and levorotatory to the worm axis, said grooves being covered with an active biofilm of microorganisms (4).

2. A bioreactor according to claim 1, **characterised in that** the gas which is being purified may be flowing cocurrently or countercurrently to the liquid.

## Patentansprüche

1. Bioreaktor für Gasreinigung, der einen aktiven Biofilm von Mikroorganismen enthält und mit einem Sprinkler sowie einem Regelungssystem ausgestattet ist, das die Flüssigkeit zirkulieren lässt, wo in dem Reaktor (1) eine in Drehung bewegliche Schnecke (2) mit mindestens zwei Gewinden (7) verbaut ist, **die sich dadurch auszeichnet,** dass in den besagten Gewinden Rillen befinden (8), die quer rechts- und linksgedreht im Verhältnis zur Schneckenachse ausgeführt sind, wobei die besagten Rillen mit einem aktiven Biofilm von Mikroorganismen (4) überzogen sind.

2. Bioreaktor nach Vorbehalt 1, **der sich dadurch auszeichnet,** dass das gereinigte Gas mit der Strömung oder gegen die Strömung im Verhältnis zu der Flüssigkeit fließen kann.

## Revendications

1. Bioréacteur destiné à l'épuration des gaz doté d'un biofilm de microorganismes actif et comportant un asperseur et un système de commande de la circulation de liquide, une vis (2) mobile étant montée rotative dans le réacteur (1), ladite vis comportant au moins deux enroulements (7), **caractérisée en ce que** des rainures (8) sont disposées dans lesdits enroulements réalisées transversales, torsadées à droite et à gauche par rapport à l'axe de la vis, les rainures étant recouvertes du biofilm de microorganismes (4) actif.

2. Bioréacteur selon la revendication 1, **caractérisé en ce que** le gaz à épurer peut circuler à courant parallèle ou à contre-courant par rapport au liquide.
